# EUROPÄISCHE PATENTSCHRIFT

(11) **EP 1 379 352 B1**
(45) Veröffentlichungstag und Bekanntmachung des Hinweises auf die Patenterteilung: **29.06.2005**
(21) Anmeldenummer: 02729863.7
(22) Anmeldetag: 09.04.2002
(51) Int. Cl.: B23D 63/14, B23D 63/12

(54) **SÄGEBLATTSCHÄRFMASCHINE**
SAW BLADE SHARPENING MACHINE
AFFUTEUSE DE LAMES DE SCIE

(30) Priorität: 19.04.2001 DE 10119084
(43) Veröffentlichungstag der Anmeldung: 14.01.2004
(73) Patentinhaber: Walter Maschinenbau GmbH, 72072 Tübingen (DE)
(72) Erfinder: TURNAU, Andree, 72184 Eutingen (DE); WAGNER, Roland, 72393 Burladingen (DE); WIMBLE, Gary, Locust Grove, VA 22508 (US)
(74) Vertreter: Patentanwälte Rüger, Barthelt & Abel
(86) Internationale Anmeldenummer: PCT/DE2002/001297
(87) Internationale Veröffentlichungsnummer: WO 2002/085564

(56) Entgegenhaltungen:
- DE-A- 19 752 140
- US-A- 3 759 118
- US-A- 3 775 909
- US-A- 4 074 593
- US-A- 4 449 427

## Beschreibung

Die Erfindung betrifft eine Schleifmaschine zum Schärfen von Sägeblättern bei der Herstellung derselben, gemäß dem Oberbegriff von Anspruch 1.

Es sind Sägeblattschärfmaschinen bekannt, die einen oder mehrere Schleifköpfe aufweisen, mit denen die Zähne eines Sägeblatts in die gewünschte Form zu bringen sind. Bekanntermaßen sind dazu mehrere Schleifkörper notwendig oder in Gebrauch. Beispielsweise sind Schleifköpfe bekannt, die eine erste Schleifscheibe, bspw. für den Zahnrücken und eine zweite Schleifscheibe, bspw. für die Zahnbrust aufweisen. Zahn für Zahn müssen dann an einem Sägeblatt z.B. zunächst der Zahnrücken und dann die Zahnbrust bearbeitet werden. Jeweils nach dem Schleifen eines Zahns wird das Sägeblatt über eine entsprechende Positioniereinrichtung genau um einen Zahn weiter gedreht. Die zur Bearbeitung des Sägeblatts erforderliche Zeit ist dann die für zwei Sägeblattumläufe erforderliche Zeit. Wie z.B. aus der DE -A-197 52 140 bekannt kann diese verkürzt werden, wenn für die Zahnbrust und den Zahnrücken getrennte Schleifköpfe vorgesehen werden. Dies hat allerdings wiederum den Nachteil, dass beide Schleifköpfe in ihrer Arbeit aufeinander genau abgestimmt, d.h. synchronisiert werden müssen. Wenn das Weiterschalten des Sägeblatts um einen Zahn erfolgt, müssen beide Schleifköpfe mit dem jeweiligen Zahn außer Eingriff sein.

Darüber hinaus ist aus der US-A-4 074 593 eine Sägeblattschärfmaschine nach dem Rundtischprinzip bekannt. Die Sägeblattschärfmaschine weist einen Drehtisch mit einzelnen Sägeblattaufnahmen auf. Um den Drehtisch herum sind Schleifköpfe gruppiert, die spezifische Operationen an den Zähnen des Sägeblatts ausführen.

Bei dieser Sägeblattschärfmaschine kommt es besonders darauf an, dass der Drehtisch und die auf diesem gehaltenen Sägeblattaufnahmen eine sichere Sägeblattpositionierung sicherstellen. Bei großen Sägeblattdurchmessern können sich insoweit Schwierigkeiten ergeben.

Davon ausgehend ist es Aufgabe der Erfindung, eine Sägeblattschärfmaschine zu schaffen, die sich insbesondere in der Produktion dazu eignet, einen hohen Ausstoß zu erzeugen.

Diese Aufgabe wird durch eine Schleifmaschine gemäß Anspruch 1 gelöst.

Die Positionierung und Spannung des Werkstücks (Sägeblatts) ist Sache der jeweiligen Schleifstation. Es können dadurch hohe Taktzahlen erreicht werden, ohne dass sich die Schleifstationen gegenseitig stören.

An jedem Sägeblatt arbeitet, zu einem gegebenen Zeitpunkt, jeweils lediglich eine Schleifeinrichtung. Damit müssen die Schleifvorgänge verschiedener Flächen an den einzelnen Zähnen nicht zueinander synchronisiert werden. Synchronisiert werden muss lediglich die Gesamtbearbeitungszeit in jeder Bearbeitungsstation, so dass der Werkstückträger insgesamt weitergeschaltet wird, wenn beide Bearbeitungsstationen jeweils fertig sind. Es ist jedoch möglich, beide Schleifstationen zueinander unsynchronisiert arbeiten zu lassen. Dies eröffnet beispielsweise die Möglichkeit, bei Sägeblättern mit versetzten Zähnen abwechselnd die rechte und die linke Flanke, dafür aber jeden Zahnrücken zu schleifen.

Die Positionierung und Arretiereinrichtung der Werkstücke erfolgt durch die Schleifstation. Dies hat weiter den Vorteil, dass die Genauigkeit des Arbeitsergebnisses in nur geringem Maße von der Positioniergenauigkeit des Werkstückträgers abhängt. Es lässt sich auf einfache und kostengünstige Weise eine hohe Fertigungsqualität erzielen.

Bei der erfindungsgemäßen Schleifmaschine gelingt es außerdem, Nebenzeiten zu minimieren. Dies gelingt, wenn jeder Schleifstation nur die Bearbeitung einer Fläche oder einer Flächengruppe aller Sägezähne zugeordnet ist. Beispielsweise kann eine Schleifstation zur Bearbeitung des Zahnrückens und die andere Schleifstation zur Bearbeitung der Zahnflanken eingerichtet sein. Auf die Bearbeitung der Zahnbrust kann in vielen Fällen verzichtet werden.

Müssen die Schleifköpfe jeweils nur eine Fläche oder Flächengruppe bearbeiten, können die Bewegungen der Schleifköpfe auf reine Zustellbewegungen reduziert werden. Positionswechsel, wie sie erforderlich sind, wenn ein Schleifkopf sowohl Zahnbrust als auch Zahnrücken oder Zahnrücken und Zahnflanken bearbeiten soll, sind vermeidbar. Dies wirkt zeitsparend.

Bei dem vorgenannten Konzept bearbeitet eine Schleifstation bspw. nur die Zahnrücken eines Sägeblatts, während die andere Schleifstation bspw. nur die Zahnflanken des Sägeblatts bearbeitet. Der Ausstoß kann, im Vergleich zu Schleifmaschinen, in denen die Bearbeitung der Zahnflanken und der Zahnrücken gleichzeitig an ein und demselben Sägeblatt erfolgt, noch erhöht werden.

Die Bearbeitungen der entsprechenden Zahnflächen erfolgt vorzugsweise mit einem Schleifkopf, der nur eine drehend angetriebene Schleifscheibe enthält. Die Form der Schleifscheibe ist der Form der zu bearbeiteten Fläche entsprechend eingerichtet. Der Schleifkopf ist insoweit vorzugsweise spezialisiert, Positionswechsel und somit entsprechende Positionierzeiten, wie sie bei Schleifköpfen mit mehreren Schleifkörpern an der Tagesordnung waren, werden grundsätzlich vermieden.

Bedarfsweise kann auch ein Schleifkopf mit einem Schleiffinger z.B. zur Erzeugung einer Hohlbrust vorgesehen sein.

Insbesondere zur Bearbeitung von Zahnflanken kann auch ein Doppelschleifkopf vorgesehen sein. Dieser ist vorzugsweise so ausgebildet, dass zwei angetriebene Schleifkörper (Schleifscheiben) gleichzeitig mit den einander gegenüberliegenden Flanken eines Zahns in Eingriff gebracht werden können. Ein wesentlicher Vorteil dieser Maßnahme liegt darin, dass die Zahnflanken eines Sägeblatts in einem einzigen Durchlauf aller Zähne des Sägeblatts geschliffen werden können, so dass sich insgesamt die gleiche Schleifzeit ergibt, wie in der anderen Schleifstation für die Bearbeitung der Zahnrücken. Zu dem Doppelschleifkopf gehören zwei gegeneinander (voneinander weg und aufeinander zu) bewegbare Schleifköpfe, von denen einer z.B. oberhalb und der andere z.B. unterhalb des Sägeblatts steht. Die Relativbewegung der Schleifköpfe zueinander kann beispielsweise durch Linearführungen und entsprechende Antriebseinheiten bewirkt werden. Die Verstellung der Schleifköpfe in Radialrichtung des Sägeblatts kann durch Verstellung eines gemeinsamen Trägers erfolgen. Gleiches gilt für die Umfangsrichtung und etwaige Schwenkbewegungen.

Insbesondere in ihrer Ausführungen mit Doppelschleifkopf in einer Bearbeitungsstation eignet sich die erfindungsgemäße Schleifmaschine zum Schärfen von Sägeblättern, die Hartmetalleinsätze tragen. Zur Herstellung Hartmetall bestückter Sägeblätter kann anstelle einer Schleifstation oder zusätzlich zu dieser auch eine Lötstation vorgesehen werden, die dazu dient, die Sägeblätter an den Zähnen mit Hartmetallkörpern zu versehen.

Bei der erfindungsgemäßen Schleifmaschine ist den Schleifstationen nicht nur die Bearbeitung des Werkstücks sondern auch dessen Positionierung zugeordnet. Der Werkstückträger dient hingegen lediglich der Förderung der Werkstücke von Schleifstation zu Schleifstation. Entsprechend können die Schleifstationen jeweils Gestelle aufweisen, die die Bearbeitungseinrichtung die Positioniereinrichtung und die Arretiereinrichtung tragen. Die Schleifmaschine kann mit einem Grundgestell versehen sein, dass, sowohl die Positioniereinheit für den Werkstückträger, als auch die beiden Gestelle der Bearbeitungseinheiten trägt. Die Anforderungen an das Maschinengestell sind dabei auch dann relativ gering, wenn eine hohe Schleifgenauigkeit an den Werkstücken (Sägeblättern) erzielt werden soll.

Die Schleifköpfe der Schleifstationen sind durch Führungseinrichtungen und Verstelleinrichtungen in mehreren Richtungen verstellbar und vorzugsweise auch schwenkbar gelagert. Dadurch wird die Einstellung der Schleifköpfe auf einer Grundposition und ausgehend von dieser eine Zustellbewegung ermöglicht, die an jedem Sägezahn wiederholt wird und zur Durchführung der Schleifbearbeitung erforderlich ist. Die Einnahme der Grundposition dient hingegen lediglich der erstmaligen Positionierung und Einrichtung der Schleifstation im Hinblick auf ein bestimmtes Sägeblatt.

Die Sägeblätter sind auf dem Werkstückträger vorzugsweise frei drehbar gelagert. Dazu dienen entsprechende Aufnahmen, wie bspw. Dorne oder ähnliches. Die Dorne können in vorgegebenen Positionen an dem Werkstückträger vorgesehen sein. Zur Anpassung an unterschiedliche zu fertigende Sägeblätter können für jeden Dorn auch mehrere Positionen vorgegeben sein. Die vorgegebenen Positionen sind an den Armen des Werkstückträgers vorzugsweise so angeordnet, dass die jeweils zugeordneten Sägeblätter mit ihren Zähnen an der gleichen Schleifstelle positioniert sind.

Weitere Einzelheiten vorteilhafter Ausführungsformen der Erfindung ergeben sich aus der Zeichnung der Beschreibung oder weiteren Unteransprüchen.

In der Zeichnung ist ein Ausführungsbeispiel der Erfindung veranschaulicht. Es zeigen:
- Fig. 1: eine erfindungsgemäße Schleifmaschine in perspektivischer Darstellung,
- Fig. 2: die Schleifmaschine nach Fig. 1 in einer schematisierten Draufsicht,
- Fig. 3: und
- Fig. 4: ein Sägeblatt in vergrößerter perspektivischer und ausschnittsweiser Darstellung und
- Fig. 5: den Werkstückträger in einer ausschnittsweisen Perspektivansicht.

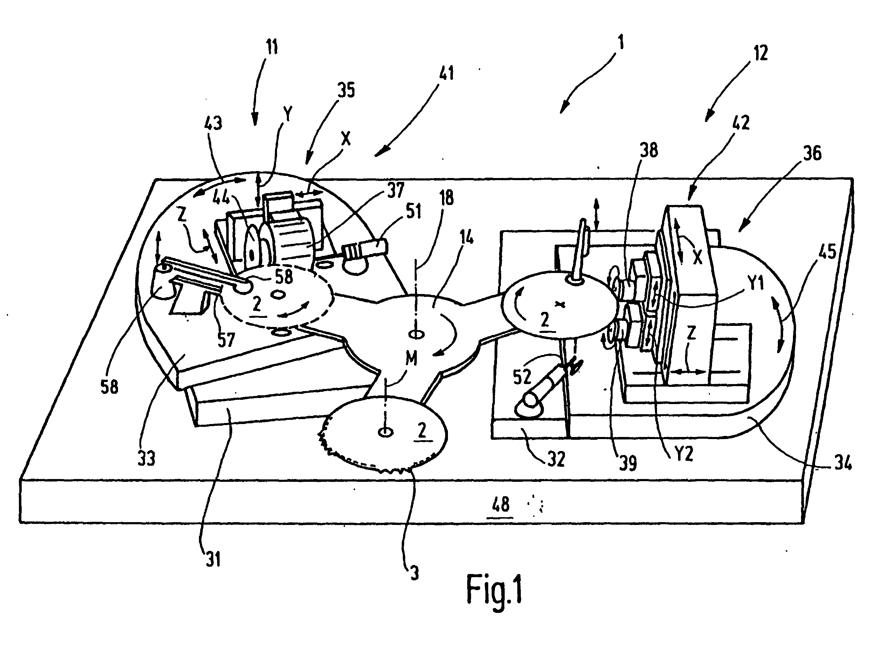

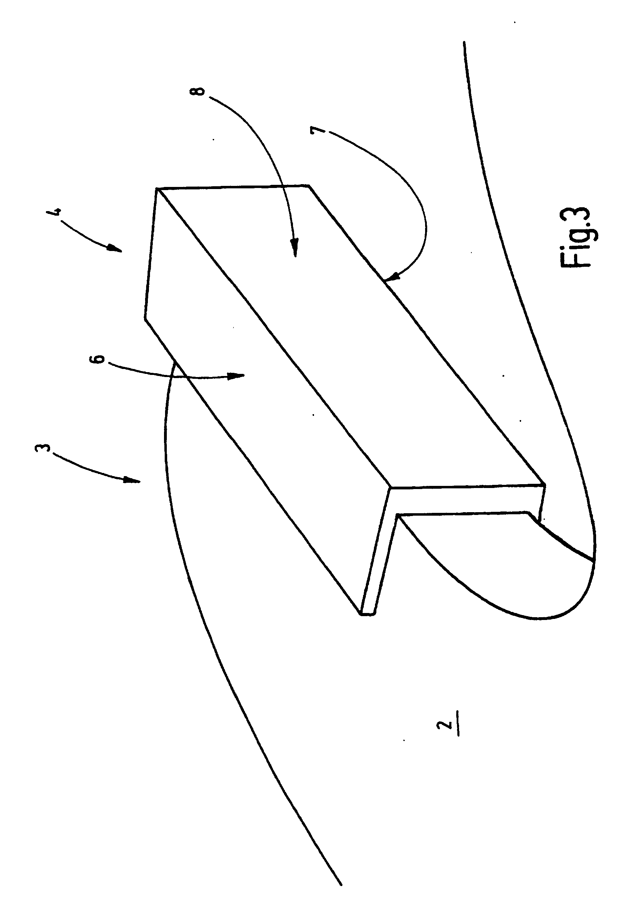

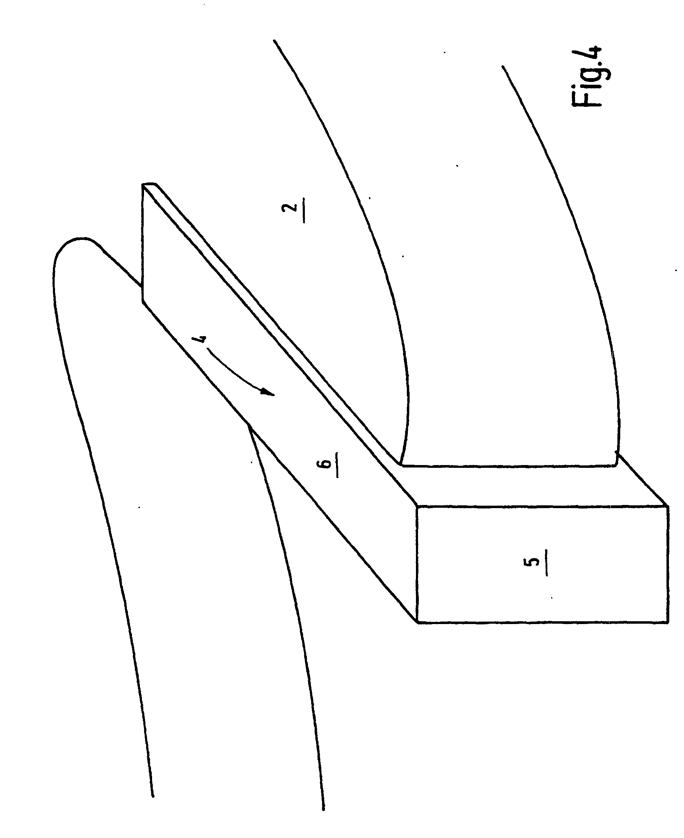

In Fig. 1 ist eine Schleifmaschine 1 veranschaulicht, die vorzugsweise dem Schleifen von Sägeblättern 2 im Fertigungsprozess dient. Die Sägeblätter 2 sind hartmetallbestückte Sägeblätter, wie sie in den Fig. 3 und 4 schematisch und in einem anderen Maßstab, sowie ausschnittsweise angedeutet sind. Jeder Zahn 3 des Sägeblatts 2 ist mit einem Hartmetallkörper 4 versehen, der zumindest über eine der Flachseiten des Sägeblatts 2 in Axialrichtung übersteht und der den Zahn, wie insbesondere aus Fig. 4 ersichtlich ist, in Radialrichtung überragt.

Der Hartmetallkörper 4 ist im wesentlichen quaderförmig ausgebildet, wobei seine radial nach außen weisende Fläche einen Zahnrücken 5 und seine beiden in Axialrichtung weisenden seitlichen Flächen Zahnflanken 6, 7 festlegen. An der Vorderseite des Zahns 2 legt der Hartmetallkörper 4 mit seiner Vorderseite eine Zahnbrust 8 fest.

Selbst bei der Herstellung kostengünstiger Sägeblätter ist es erforderlich, den Zahnrücken 5 und die Zahnflanken 6, 7 zu schleifen. Auf den Schliff der Zahnbrust 8 kann hingegen in vielen Fällen verzichtet werden.

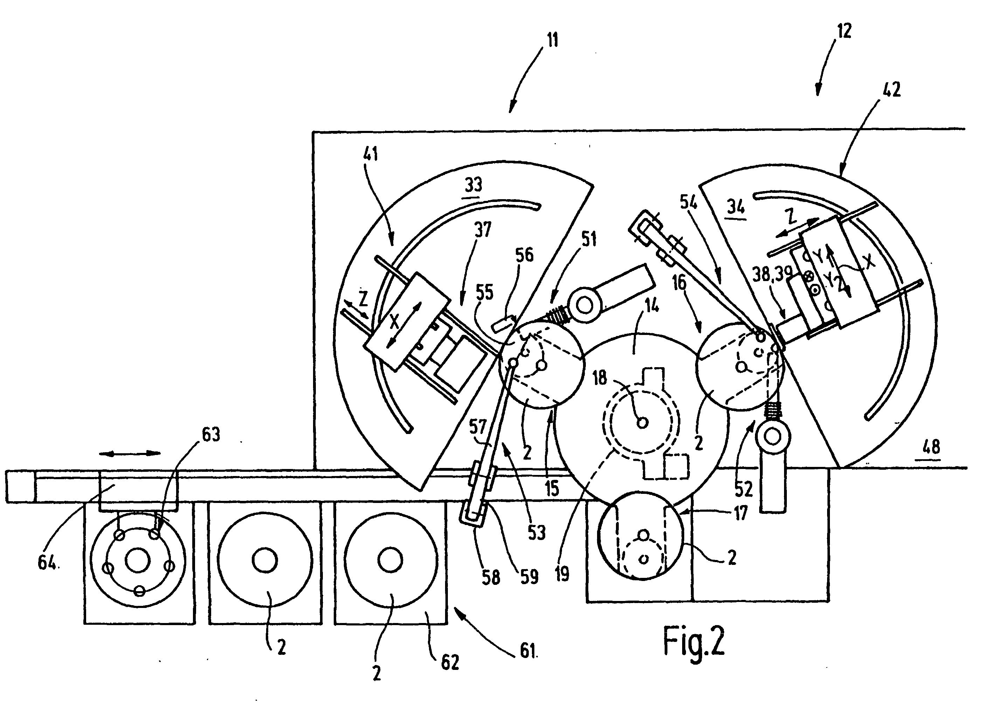

Bei der erfindungsgemäßen Schleifmaschine 1 erfolgt der Zahnrückenschliff und der Zahnflankenschliff in voneinander getrennten Schleifstationen 11, 12, die das Sägeblatt 2 nacheinander durchläuft. Dem Transport der Sägeblätter dient dazu ein Werkstückträger 14, der, wie bspw. aus der in Fig. 2 wiedergegebenen Draufsicht ersichtlich ist, drei im gleichmäßigen Winkelabstand zueinander angeordnete Arme 15, 16, 17 aufweist. Der Werkstückträger 14 ist um eine vertikale Drehachse 18 drehbar gelagert. Zur Weiterdrehung des Werkstückträgers 14 jeweils um 120° um diese Achse dient eine Positioniereinheit 19, die den Werkstückträger 14 jeweils weiter bewegt und dann in der erreichten Position während der Bearbeitung der Sägeblätter 2 hält.

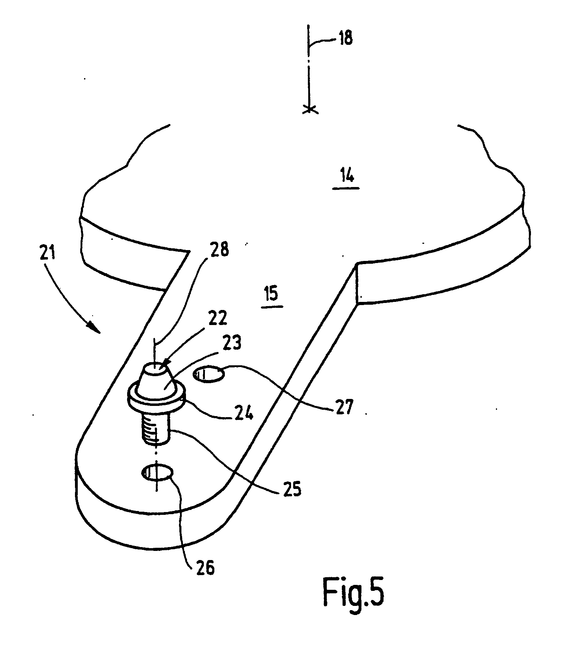

Der Werkstückträger 14 und sein Arm 15 sind aus Fig. 5 ersichtlich. Der Arm 15 erstreckt sich wie die anderen Arme 16, 17 in Radialrichtung von der Drehachse 18 weg. An der Oberseite sind die Arme 15, 16, 17 im wesentlichen flach ausgebildet. Als Aufnahme 21 für das Sägeblatt 2 dient bspw. ein Dorn 22, der an seinem oberen Ende einen sich verjüngenden, bspw. konischen Abschnitt 23, darunter einen Flansch 24 zur Lagerung des Sägeblatts 2 und einen gewindetragenden Schaft 25 zur Verbindung mit dem Werkstückträger 14 aufweist. Dem Dorn 22 sind ein oder mehrere in dem Arm 15 vorgesehene Öffnungen 26, 27 zugeordnet.

Der Dorn 22 und die Öffnungen 26, 27 sind so orientiert, dass die Mittelachse 28 des Dorns 22 parallel zu der Drehachse 18 orientiert ist. Die Sägeblätter 2 sind deshalb, wie aus Fig. 1 ersichtlich, in der Schleifmaschine 1 horizontal orientiert und liegen durch den Dorn 22 zentriert, jedoch drehbar auf den jeweiligen Aufnahmen 21 auf. Anstelle des Dorns 22 kann auch eine anderweitige Aufnahme vorgesehen sein, die das Sägeblatt hält und lagert.

Wie aus den Fig. 1 und 2 ersichtlich, sind die Bearbeitungsstationen 11, 12 ähnlich aufgebaut. Sie weisen jeweils einen Rahmen bzw. ein Gestell 31, 32 auf, auf dem ein Tisch 33, 34 schwenkbar gelagert ist. Dem Tisch 33, 34 ist eine nicht weiter veranschaulichte Antriebseinrichtung zugeordnet, um den Tisch jeweils in eine gewünschte Schwenkposition bringen zu können.

Der Tisch 33, 34 trägt, wie Fig. 1 veranschaulicht, jeweils eine Kreuztischanordnung 35, 36, die ihrerseits einen Schleifkopf 37 oder zwei Schleifköpfe 38, 39 trägt.

Der Tisch 33 bildet mit der Kreuztischanordnung 35, der nicht weiter veranschaulichte Antriebseinrichtungen zugeordnet sind, und dem Schleifkopf 37 eine Schleifeinrichtung 41. Der Tisch 34 bildet mit der Kreuztischanordnung 36 und den Schleifköpfen 38, 39 ebenfalls eine Schleifeinrichtung 42.

Der Tisch 33 ist um eine vertikale, zu der Drehachse 18 parallele Schwenkachse 43 verstellbar. Diese Achse wird auch als B-Achse bezeichnet. Radial dazu ist ein erster Schlitten der Kreuztischanordnung 35 in Z-Richtung verstellbar. Dieser Z-Schlitten trägt einen quer dazu verstellbaren Schlitten (X-Richtung). Der X-Schlitten trägt wiederum einen Schlitten der in vertikalen, zu der Drehachse 18 paralleler Richtung (Y-Richtung) verstellbar ist. Die Verstellrichtungen X, Y, Z, sowie die B-Achse dienen der Einrichtung und Einstellung einer gewünschten Position des Schleifkopfes 37 sowie zur Durchführung einer Zustellbewegung desselben. Die Reihenfolge der Schlitten kann alternativ auch anders festgelegt werden.

Der Schleifkopf 37 weist eine angetriebene Schleifscheibe 44 auf, die als Schleifscheibe für den Zahnrücken 5 eingerichtet ist. Sie arbeitet mit ihrer schmalen Außenumfangsfläche. Ihre Drehachse ist ungefähr radial zu dem Sägeblatt 2 orientiert und stimmt mit der Richtung des Zahnrückens 5 überein.

Die Bearbeitungsstation 12 ist entsprechend aufgebaut. Der Tisch 34 ist um eine Schwenkachse 45 schwenkbar, die parallel zu der Drehachse 18 ausgerichtet ist und als B-Achse bezeichnet wird. Auf dem Tisch 34 ist radial zu der B-Achse ein Schlitten in Z-Richtung verstellbar. Der Z-Schlitten trägt wiederum einen in X-Richtung quer dazu horizontal verstellbaren Schlitten. Dieser ist mit zwei gesondert in Y-Richtung verstellbaren Schlitten (Y1, Y2) versehen, die jeweils den Schleifkopf 38 bzw. 39 tragen. Die Schleifköpfe 38, 39 weisen jeweils eine Schleifscheibe 46, 47 auf, die zum Schliff der Zahnflanken 6, 7 dienen. Ihre Drehachsen sind parallel zueinander sowie etwa radial zu dem Sägeblatt 2 orientiert.

Die beiden Gestelle 31, 32 sind auf einem gemeinsamen Maschinengestell oder Grundgestell 48 gelagert, das auch die Positioniereinheit 19 trägt. Auf dem Grundgestell 48 oder den Gestellen 31, 32 oder, wie in Fig. 1 veranschaulicht, den Tischen 33, 34 sind für jede Bearbeitungsstation 11, 12 jeweils eine Positioniereinrichtung 51, 52 sowie eine Arretiereinrichtung 53, 54 vorgesehen. Die Positioniereinrichtung 51, 52 sind übereinstimmend aufgebaut. Sie sind als sogenannte Teilfinger ausgebildet, die einen von einem Finger getragenen Stift 55 aufweisen der dazu dient, die einzelnen Zähne 3 des Sägeblatts 2 schrittweise zu bewegen. Der Stift 55 durchläuft dabei einen schleifenförmigen Weg 56. In jeder Bearbeitungsstation 11, 12 arbeitet der jeweilige Teilfinger synchron zu dem Schleifkopf 37 bzw. den Schleifköpfen 38, 39.

Die Arretiereinrichtungen 53, 54 sind ebenfalls übereinstimmend ausgebildet. Die Arretiereinrichtung 53 ist als Klemmeinrichtung ausgebildet und dient dazu, das Sägeblatt 2 in Bearbeitungsposition so fest zu klemmen, dass sein Zahn 3 während des Schleifvorgangs fest und ruhig gehalten ist. Dazu weist die Arretiereinrichtung 53 zwei einander gegenüberliegend angeordnete Klemmbacken auf, die das Sägeblatt 2 über- bzw. untergreifen und mit den Flachseiten desselben in Berührung kommen. Der untere Klemmbacken 57 ist vorzugsweise ortsfest angeordnet, während der obere Klemmbacken 58, wie insbesondere aus Fig. 1 hervorgeht, nach Art einer Wippe über dem unteren Klemmbacken 57 gelagert ist. Eine entsprechende Antriebseinrichtung 58 die an dem hinteren, von dem Sägeblatt 2 abliegenden Ende 59 des oberen Klemmbackens 57 angreift dient dazu, das Sägeblatt 2 zwischen den einander gegenüberliegenden Klemmbacken gesteuert fest zu klemmen bzw. frei zu geben.

Wie Fig. 1 weiter veranschaulicht, sind die Bearbeitungsstationen 11, 12 bezogen auf die Drehachse 18 um 120° gegeneinander versetzt angeordnet. Eine dazwischenliegende, ebenfalls um 120° versetzt angeordnete Position ist die Be- und Entladeposition. Um geschliffene Sägeblätter von dem Werkstückträger 14 abzunehmen und noch zu schleifende Sägeblätter auf diesen aufzusetzen, ist an der Schleifmaschine 1 eine aus Fig. 2, zumindest im Grundprinzip ersichtliche Be- und Entladeeinheit 61 vorgesehen. Zu dieser können ein oder mehrere Sägeblattträger 62 gehören, denen ein Greifer 63 mit Vakuumsaugern und/oder Magneten zugeordnet ist. Dieser kann an einem linear verstellbar gelagerten Schlitten 64 gehalten sein, der das Be- und Entladen des Werkstückträgers 14 bewirkt.

Die insoweit beschriebene Schleifmaschine 1 arbeitet wie folgt:

In Betrieb legt der Greifer 63 zunächst ein erstes Sägeblatt 2 in der in Fig. 2, unten befindlichen Position auf den Werkstückträger 14. Die Zentralöffnung des Sägeblatts findet spielarm auf den Dorn 22 auf, dem das Sägeblatt 2 somit frei drehbar gelagert ist. Der Werkstückträger 14 dreht dann um 120° um die Drehachse 18 weiter, wodurch das Sägeblatt 2 in die erste Schleifstation 11 transportiert wird und zwischen die Backen der Arretiereinrichtung 53 findet. Die durch den Teilfinger gebildete Positioniereinrichtung 51 greift nun mit dem Stift 55 in eine erste Zahnlücke und bringt einen ersten Zahn in Bearbeitungsposition. Die Arretiereinrichtung 53 schließt nun und klemmt den zu bearbeitenden Zahn des Sägeblatts 2 relativ zu dem Schleifkopf 37 fest. Dieser kann nun den Zahnrücken schleifen. Ist dies beendet, öffnet sich die Arretiereinrichtung 53 und die Positioniereinrichtung 51 schiebt das Sägeblatt 2 um einen Zahn weiter. Auf diese Weise werden nach und nach alle Zähne des Sägeblatts 2 an ihren Zahnrücken 5 bearbeitet.

Ist die Bearbeitung beendet, dreht der Werkstückträger 14 um 120°, wodurch das an den Zahnrücken 5 bereits bearbeitete Sägeblatt 2 in die Schleifstation 12 findet. Hier findet nun wiederum Zahn für Zahn die Bearbeitung der Zahnflanken statt. Mit der Überführung des Sägeblatts 2 aus der Schleifstation 11 in die Schleifstation 12 hat der Werkstückträger 14 ein weiteres noch unbearbeitetes Sägeblatt 2 in die Schleifstation 11 geführt. Während dem vorigen Sägeblatt 2 in der Schleifstation 12 der gewünschte Zahnflankenschliff gegeben wird, erfolgt der Zahnrückenschliff in der Schleifstation 11.

Beide Schleifstationen 11, 12 arbeiten insgesamt synchron zueinander. Jedoch können die Schleifzeiten einer einzelnen Schleifoperation eines Zahns in den Schleifstationen 11, 12 unterschiedlich sein. Beispielsweise ist es möglich, in der Schleifstation 11 alle Zahnrücken nacheinander zu schleifen, während in der Schleifstation 12 die oberen Zahnflanken 6 nur der geradzahligen Zähne und die unteren Zahnflanken 7 nur der ungeradzahligen Zähne geschliffen werden, so dass das Weiterschalten der einzelnen Sägeblätter 2 in den Schleifstationen 11 und 12 zu unterschiedlichen Zeiten und mit unterschiedlichen Schrittweiten erfolgt. Dies ist jedoch nicht zwingend, es können auch beide Stationen vollkommen synchron arbeiten.

Durch die Zuordnung der Positioniereinrichtungen 51, 52 sowie der Arretiereinrichtungen 53, 54 zu den jeweiligen Schleifstationen 11, 12 ist die Positionierung der Sägeblätter 2 in den Schleifstationen 11, 12 relativ unabhängig von der genauen Positionierung des Werkstückträgers 14. Außerdem erfolgt auf diesem Wege eine Entkopplung der Bearbeitung der beiden Sägeblätter 2 voneinander. Insbesondere ist eine Störung des Arbeitsablaufs an einem Sägeblatt durch den Arbeitsablauf an einem anderen Sägeblatt, bspw. durch Schwingungsübertragung über den Werkstückträger 14 unwahrscheinlich, wenn nicht ausgeschlossen.

Die Schleifmaschine 1 ist als Mehrstationen-Schleifmaschine ausgebildet, die zwei vollständige Schleifstationen 11, 12 ausweist. Die Schleifstationen 11, 12 weisen Schleifköpfe auf, die über entsprechende Positioniereinrichtungen, wie bspw. Kreuztischanordnungen 35, 36 und/oder Schwenktische 33, 34 in Bezug auf das Sägeblatt 2 bewegbar sind. Zu den Schleifstationen 11, 12 gehören außerdem Positioniereinrichtungen 51, 52 und Arretiereinrichtungen 53, 54 für das Werkstück. Der Werkstückträger 14 dient nur der Positionierungen der Sägeblätter 2 insoweit, als in den Schleifstationen 11, 12 ihre Mittelachse festzulegen ist. Die Drehung der Sägeblätter 2 um diese Mittelachse M und das Festklemmen des Sägeblatts in der jeweiligen Drehposition zur Durchführung der Schleifoperation obliegt den betreffenden Einheiten der Schleifstation 11, 12.

Bedarfsweise kann die Schleifmaschine auch drei Schleifstationen im 90°-Abstand und einen vierarmigen, kreuzförmigen Werkstückträger aufweisen. Die dritte Schleifstation kann z.B. dem Schleifen der Zahnbrust dienen. Falls gewünscht kann die Schleifmaschine auch weitere Fertigungsschritte ausführen. Z.B. kann anstelle einer Schleifstation oder zusätzlich zu den vorhandenen Schleifstationen eine Lötstation vorgesehen sein, die in den gleichen Winkelabständen zu den Schleifstationen angeordnet ist, wie die Schleifstationen untereinander. Die Lötstation kann dazu dienen, Hartmetallplatten an den Zähnen 3 zu befestigen.

Mit der derartig ausgebildeten Schleifmaschine 1 ist eine sehr schnelle und präzise und somit kostensparende Bearbeitung von Sägeblättern möglich. Die Schleifmaschine 1 eignet sich insbesondere für das Schärfen von Sägeblättern im Rahmen der Fertigung.

## Patentansprüche

1. Schleifmaschine (1) für Sägeblätter (2), mit einem um eine vertikale Drehachse (18) drehbas gelagasten Werkstückträger (14), der zur gleichzeitigen Aufnahme mehrerer gleicher Sägeblätter (2) eingerichtet ist,
mit einer Positioniereinheit (19), die mit dem Werkstückträger (14) verbunden ist und dazu dient, den Werkstückträger (14) schrittweise zu bewegen und in vorgesehenen Positionen zu halten,
mit wenigstens zwei Schleifstationen (11, 12), die jeweils
eine Schleifeinrichtung (41, 42) zur Bearbeitung wenigstens einer festgelegten Fläche (5, 6, 7) des Sägeblatts (2) aufweisen,
**dadurch gekennzeichnet, dass** die Schleifstationen (11; 12) außerdem jeweils eine Positioniereinrichtung (51, 52) zur Positionierung des Sägeblatts (2) in der Bearbeitungsstation (11, 12) und
jeweils eine Arretiereinrichtung (53, 54) zur zeitweiligen Spannung des Sägeblatts (2) in der Bearbeitungsstation (11, 12) aufweisen,
wobei die Sägeblättes (2) in des Schleifmaschine (1) horizontal orientert sind.

2. Schleifmaschine nach Anspruch 1, **dadurch gekennzeichnet, dass** jede Bearbeitungsstation (11, 12) dazu eingerichtet ist, nur eine Fläche (5) oder nur eine Flächengruppe (6, 7) aller Sägezähne (3) des in der Bearbeitungsstation befindlichen Sägeblatts (2) zu bearbeiten.

3. Schleifmaschine nach Anspruch 1, **dadurch gekennzeichnet, dass** die Schleifeinrichtung (41) einen Schleifkopf (37) aufweist, der für die Bearbeitung einer Fläche eines Sägezahns (3) eingerichtet ist.

4. Schleifmaschine nach Anspruch 3, **dadurch gekennzeichnet, dass** der Schleifkopf (37) zur Bearbeitung einer Zahnfläche eingerichtet ist, die einen Zahnrücken (5) bildet.

5. Schleifmaschine nach Anspruch 1, **dadurch gekennzeichnet, dass** die Schleifeinrichtung (42) wenigstens einen Schleifkopf (38, 39) aufweist, der zur Bearbeitung zweier einander gegenüberliegenden Zahnflächen eingerichtet ist und dass diese Zahnflächen Zahnflanken (6, 7) bilden.

6. Schleifmaschine nach Anspruch 5, **dadurch gekennzeichnet, dass** die Schleifköpfe (38, 39) gleichzeitig mit dem Sägezahn (3) in Eingriff bringbar sind.

7. Schleifmaschine nach Anspruch 1, **dadurch gekennzeichnet, dass** die Schleifmaschine (1) ein Grundgestell (48) aufweist, das die Gestelle (31, 32) der Schleifstationen (11, 12) und die Positioniereinheit (19) für den Werkstückträger (14) trägt.

8. Schleifmaschine nach Anspruch 1, **dadurch gekennzeichnet, dass** die Schleifstationen (11, 12) derart angeordnet und ausgebildet sind, dass deren Schleifeinrichtungen (37, 38, 39) gleichzeitig zu betreiben sind.

9. Schleifmaschine nach Anspruch 1, **dadurch gekennzeichnet, dass** zu den Schleifeinrichtungen (41, 42) der Schleifkopf (37, 38, 39) sowie Positionier-, Führungs- und Verstelleinrichtungen (33, 35; 34, 36) gehören, um den jeweiligen Schleifkopf (37, 38, 39) jeweils in wenigstens drei zueinander rechtwinkligen Raumrichtung (x, y, z) und in einer Schwenkrichtung (B) zu bewegen, die parallel zu der Drehachse des Sägeblatts (2) ausgerichtet ist.

10. Schleifmaschine nach Anspruch 1, **dadurch gekennzeichnet, dass** der Werkstückträger (14) Aufnahmen (21) zur frei drehbaren Lagerung der Sägeblätter (2) aufweist.

11. Schleifmaschine nach Anspruch 10, **dadurch gekennzeichnet, dass** der Werkstückträger (14) drei- oder mehrarmig ausgebildet ist und an jedem Arm (15, 16, 17) wenigstens eine Aufnahme (21) aufweist.

12. Schleifmaschine nach Anspruch 10, **dadurch gekennzeichnet, dass** die Aufnahme (21) durch einen Dorn (22) gebildet ist, der in seinem Radialabstand zu der Drehachse (18) des Werkstückträgers (14) verstellbar angeordnet ist.

13. Schleifmaschine nach Anspruch 12, **dadurch gekennzeich** **net, dass** jedem Dorn (22) mehrere vorgegebene Positionen zugeordnet sind.

## Claims

1. Grinding machine (1) for saw blades (2),
with a workpiece holder (14), which is disposed to be rotatable around a vertical rotational axis (18) and which is fitted to receive several identical saw blades (2) simultaneously,
with a positioning unit (19), which is connected to the workpiece holder (14) and serves to move the workpiece holder (14) step by step and to hold it in provided positions,
with at least two grinding stations (11, 12), which respectively have a grinding device (41, 42) for machining at least one defined surface (5, 6, 7) of the saw blade (2),
**characterised in that** the grinding stations (11, 12) each have a positioning device (51, 52) for positioning the saw blade (2) in the machining station (11, 12) and
respectively have a locking means (53, 54) for temporarily clamping the saw blade (2) in the machining station (11, 12),
wherein the saw blades (2) are oriented horizontally in the grinding machine (1).

2. Grinding machine according to Claim 1, **characterised in that** each machining station (11, 12) is fitted to only machine one surface (5) or only one surface group (6, 7) of all saw teeth (3) of the saw blade (2) located in the machining station.

3. Grinding machine according to Claim 1, **characterised in that** the grinding device (41) has a grinding head (37), which is fitted for machining a surface of a saw tooth (3).

4. Grinding machine according to Claim 3, **characterised in that** the grinding head (37) is fitted for machining a tooth surface, which forms a tooth back (5).

5. Grinding machine according to Claim 1, **characterised in that** the grinding device (42) has at least one grinding head (38, 39), which is fitted for machining two opposing tooth surfaces, and that these tooth surfaces form tooth flanks (6, 7).

6. Grinding machine according to Claim 5, **characterised in that** the grinding heads (38, 39) can be brought into engagement simultaneously with the saw tooth (3).

7. Grinding machine according Claim 1, **characterised in that** the grinding machine (1) has a base frame (48), which supports the frames (31, 32) of the grinding stations (11, 12) and the positioning unit (19) for the workpiece holder (14).

8. Grinding machine according to Claim 1, **characterised in that** the grinding stations (11, 12) are arranged and configured in such a way that their grinding devices (37, 38, 39) are to be operated simultaneously.

9. Grinding machine according to Claim 1, **characterised in that** the grinding devices (41, 42) include the grinding head (37, 38, 39) as well as positioning, guiding and adjusting devices (33, 35; 34, 36) in order to move the respective grinding head (37, 38, 39) in at least three respective areal directions (x, y, z) at right angles to one another and in a swivelling direction (B), which is oriented parallel to the rotational axis of the saw blade (2).

10. Grinding machine according to Claim 1, **characterised in that** the workpiece holder (14) has seats (21) to hold the saw blades (2) in a freely rotatable manner.

11. Grinding machine according to Claim 10, **characterised in that** the workpiece holder (14) is three- or multiple-armed and has at least one seat (21) on each arm (15, 16, 17).

12. Grinding machine according to Claim 10, **characterised in that** the seat (21) is formed by a mandrel (22), which is arranged to be adjustable in its radial distance from the rotational axis (18) of the workpiece holder (14).

13. Grinding machine according to Claim 12, **characterised in that** several predetermined positions are allocated to each mandrel (22).

## Revendications

1. Affûteuse (1) de lames de scie (2) qui comporte :
- un porte-pièces (14) monté tournant autour d'un axe vertical de rotation (18) et qui est conçu pour accueillir en même temps plusieurs lames de scie (2) identiques,
- une unité de positionnement (19) qui est reliée au porte-pièces (14) et qui sert à déplacer celui-ci pas à pas et à le maintenir dans des positions prévues,
- au moins deux postes d'affûtage (11, 12) présentant chacun un poste d'affûtage (41, 42) pour usiner au moins une surface fixe (5, 6, 7) de la lame de scie (2),
**caractérisée en ce que** les postes d'affûtage (11, 12) présentent chacun un dispositif de positionnement (51, 52) servant à positionner la lame de scie (2) dans le poste d'usinage (11, 12) et également un dispositif d'arrêt (53, 54) pour serrer temporairement la lame de scie (2) dans le poste d'usinage (11, 12), les lames de scie (2) étant disposées horizontalement dans l'affûteuse (1).

2. Affûteuse selon la revendication 1, **caractérisée en ce que** chaque poste d'usinage (11, 12) est conçu pour usiner seulement une face (5) ou un groupe de faces (6, 7) de toutes les dents (3) de la lame de scie (2) qui se trouvent dans le poste d'usinage.

3. Affûteuse selon la revendication 1, **caractérisée en ce que** le dispositif d'affûtage (41) comprend une tête d'affûtage (37) qui est conçue pour usiner une face d'une dent de scie (3).

4. Affûteuse selon la revendication 3, **caractérisée en ce que** la tête d'affûtage (37) est conçue pour usiner une face de dent qui constitue le dos de dent (5).

5. Affûteuse selon la revendication 1, **caractérisée en ce que** le dispositif d'affûtage (42) comprend au moins une tête d'affûtage (38, 39) qui est conçue pour usiner deux faces de dent situées face à face et qui sont les flancs de dent (6, 7).

6. Affûteuse selon la revendication 5, **caractérisée en ce que** les têtes d'affûtage (38, 39) peuvent être amenées simultanément en prise avec la dent de scie (3).

7. Affûteuse selon la revendication 1, **caractérisée en ce que** l'affûteuse (1) présente un châssis de base (48) qui porte les châssis (31, 32) des postes d'affûtage (11, 12) ainsi que l'unité de positionnement (19) du porte-pièces (14).

8. Affûteuse selon la revendication 1, **caractérisée en ce que** les postes d'affûtage (11, 12) sont disposés et configurés de manière que leur dispositif d'affûtage (37, 38, 39) sont à entraîner en même temps.

9. Affûteuse selon la revendication 1, **caractérisée en ce que** font partie des dispositifs d'affûtage (41, 42), la tête d'affûtage (37, 38, 39) ainsi que les dispositifs de positionnement, de guidage et de déplacement (33, 35 ; 34, 36), pour déplacer la tête d'affûtage correspondante (37, 38, 39) chaque fois dans au moins trois directions spatiales perpendiculaires entre elles (X, Y, Z) et selon une direction de pivotement (B) qui est parallèle à l'axe de rotation de la lame de scie (2).

10. Affûteuse selon la revendication 1, **caractérisée en ce que** le porte pièce (14) présente des réceptacles (21) pour le montage en rotation libre des lames de scie (2).

11. Affûteuse selon la revendication 10, **caractérisée en ce que** le porte pièce (14) présente trois bras ou plus et sur chaque bras (15, 16, 17) au moins un organe d'accueil (21).

12. Affûteuse selon la revendication 10, **caractérisée en ce que** le réceptacle (21) est constitué par une broche (22) dont la distance radiale par rapport à l'axe de rotation (18) du porte pièce (14) est réglable.

13. Affûteuse selon la revendication 12, **caractérisée en ce qu'**à chaque broche (22) sont affectées plusieurs positions prédéfinies.
